(19) Europäisches Patentamt
European Patent Office
Office européen des brevets

(11) **EP 4 671 283 A1**

(12) **EUROPEAN PATENT APPLICATION**

(43) Date of publication:
**31.12.2025 Bulletin 2026/01**

(21) Application number: **25182044.5**

(22) Date of filing: **11.06.2025**

(51) International Patent Classification (IPC):
***C08C 19/00*** *(2006.01)* ***C08C 19/22*** *(2006.01)*
***B60C 1/00*** *(2006.01)* ***C08K 5/55*** *(2006.01)*
***C08L 7/00*** *(2006.01)* ***C08K 3/36*** *(2006.01)*
***C08L 9/06*** *(2006.01)*

(52) Cooperative Patent Classification (CPC):
(C-Sets available)
**C08C 19/00; C08C 19/22** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.06.2024 JP 2024103388**

(71) Applicant: **Sumitomo Rubber Industries, Ltd.**
**Kobe-shi, Hyogo 651-0072 (JP)**

(72) Inventor: **HOSOYA, Hiromu**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **TIRE**

(57) It is an object of the present invention to provide a tire that is excellent in fuel efficiency. The above-described tire is a tire comprising at least one rubber member composed of a cross-linked rubber comprising: a rubber component comprising an isoprene-based rubber and a butadiene unit-containing rubber; silica; and a cross-linking agent, wherein the cross-linked rubber has a boron atom-containing group, and wherein the tire satisfies the following inequalities, where $A_{IR}$ represents a content, in % by mass, of the isoprene-based rubber in the rubber component, $A_{BD}$ represents a content, in % by mass, of the butadiene unit-containing rubber in the rubber component, and T represents a thickness, in mm, of the rubber member: (1) $A_{IR}+A_{BD}>70$; (2) $(A_{IR}+A_{BD})/T>10.0$; provided that $A_{IR}>10$, $A_{BD}>10$.

EP 4 671 283 A1

(52) Cooperative Patent Classification (CPC): (Cont.)

C-Sets
**C08L 9/06, C08L 9/00, C08L 7/00, C08L 91/00, C08L 91/06, C08K 5/55, C08K 3/04, C08K 3/36, C08K 5/548, C08K 5/18, C08K 5/09, C08K 3/06, C08K 5/31, C08K 5/47;**
**C08L 9/06, C08L 9/00, C08L 15/00, C08L 91/00, C08L 91/06, C08K 3/04, C08K 3/36, C08K 5/548, C08K 5/18, C08K 5/09, C08K 3/06, C08K 5/31, C08K 5/47;**
**C08L 15/00, C08L 9/06, C08L 7/00, C08L 9/00, C08L 91/00, C08L 91/06, C08K 3/04, C08K 3/36, C08K 5/548, C08K 5/18, C08K 5/09, C08K 3/06, C08K 5/31, C08K 5/47;**
**C08L 15/00, C08L 15/00, C08L 9/00, C08L 91/00, C08L 91/06, C08K 3/04, C08K 3/36, C08K 5/548, C08K 5/18, C08K 5/09, C08K 3/06, C08K 5/31, C08K 5/47;**
**C08L 15/00, C08L 15/00, C08L 15/00, C08L 9/00, C08L 91/00, C08L 91/06, C08K 3/04, C08K 3/36, C08K 5/548, C08K 5/18, C08K 5/09, C08K 3/06, C08K 5/31, C08K 5/47;**
C08F 236/06, C08F 212/08

## Description

TECHNICAL FIELD

The present invention relates to a tire.

BACKGROUND OF THE INVENTION

In recent years, there has been an increasing demand for improved fuel efficiency in an automobile, and there has also been a demand for improved fuel efficiency with reduction in rolling resistance in a tire that constitutes an automobile. JP 2024-14499 A describes that fuel efficiency is improved by using a specified thermoplastic elastomer.

SUMMARY OF THE INVENTION

However, there has been a demand for a further improvement in fuel efficiency in response to environmental issues.
It is an object of the present invention to provide a tire that is excellent in fuel efficiency.
The present invention relates to a tire below:
a tire comprising at least one rubber member composed of a cross-linked rubber comprising:

a rubber component comprising an isoprene-based rubber and a butadiene unit-containing rubber,
silica, and
a cross-linking agent,
wherein the cross-linked rubber has a boron atom-containing group, and
wherein the tire satisfies the following inequalities, where $A_{IR}$ represents a content, in % by mass, of the isoprene-based rubber in the rubber component, $A_{BD}$ represents a content, in % by mass, of the butadiene unit-containing rubber in the rubber component, and T represents a thickness, in mm, of the rubber member:

(1)

$$A_{IR}+A_{BD}>70,$$

(2)

$$(A_{IR}+A_{BD})/T>10.0,$$

(provided that $A_{IR}>10$, $A_{BD}>L0$).

According to the present invention, a tire that is excellent in fuel efficiency can be provided.

BRIEF DESCRIPTION OF THE DRAWINGS

FIG. 1 is a schematic view showing a part of a cross section (upper right part of the cross section) taken along a plane including a tire rotation axis of a tire relating to one embodiment of the present invention.

DETAILED DESCRIPTION

A tire that is one embodiment of the present invention will be described below. The tire of the present embodiment is a tire below:

a tire comprising at least one rubber member composed of a cross-linked rubber comprising: a rubber component comprising an isoprene-based rubber and a butadiene unit-containing rubber; silica; and a cross-linking agent,
wherein the cross-linked rubber has a boron atom-containing group, and
wherein the tire satisfies the following inequalities, where $A_{IR}$ represents a content, in % by mass, of the isoprene-based rubber in the rubber component, $A_{BD}$ represents a content, in % by mass, of the butadiene unit-containing rubber in the rubber component, and T represents a thickness, in mm, of the rubber member:

(1)

$$A_{IR}+A_{BD}>70,$$

(2)

$$(A_{IR}+A_{BD})/T>10.0,$$

(provided that $A_{IR}>10$, $A_{BD}>L0$).

Although it is not intended to be bound by a theory, the following is considered as a mechanism by which fuel efficiency is improved in the present invention. That is, (a) since a boron atom, particularly a boron atom in a neutral boron compound can interact with Si-OH on a silica surface, a polymer having a boron-containing group can strongly interact with silica. This prevents silica from aggregating with each other, improving dispersibility of silica, which is considered to contribute to improvement of fuel efficiency. (b) When the isoprene-based rubber and the butadiene unit-containing rubber are each compounded in a predetermined amount or more so as to satisfy the inequality (1) and a total amount thereof is greater than 70% by mass, such a mixed polymer forms a main polymer and a proportion of double bonds is also increased. Therefore, an introduction rate of the boron-containing group into the mixed polymer can be increased, thereby improving dispersibility of silica, which is considered to contribute to improvement of fuel efficiency. (c) Under the main polymer that satisfies the inequality (1), as described in (b) above, the introduction rate of the boron atom-containing group can be increased, and therefore, a thickness of a silica-adsorbed rubber is increased accordingly, while the improvement in dispersibility of silica also promotes a uniform dispersion of silica, so that occurrence of non-uniform hard phases can be prevented. For this reason, the thickness of the rubber member can be reduced so as to satisfy the inequality (2) relative to a total amount of the main polymer, which is thereby considered to contribute to improvement of fuel efficiency. Then, it is considered that, with cooperation of (a) to (c), fuel efficiency of the tire is dramatically improved.

A value on the right side in the inequality (2) is preferably 12.0, more preferably 14.0.

This is because it is considered that, when the inequality (2) is satisfied under a stricter condition, the effects of the present invention are further exhibited.

A content of boron based on 100 parts by mass of the rubber component is preferably 0.05 parts by mass or more.

The butadiene unit-containing rubber preferably comprises a styrene-butadiene rubber.

The butadiene unit-containing rubber preferably comprises a styrene-butadiene rubber and a butadiene rubber.

A content of the styrene-butadiene rubber in the rubber component is preferably 80% by mass or more.

It is preferable that the cross-linked rubber comprises a plasticizing agent, and that a content of the plasticizing agent is 15 parts by mass or less based on 100 parts by mass of the rubber component.

It is preferable that the cross-linked rubber comprises a plasticizing agent, the plasticizing agent comprising resin, and that a content of the resin is 2 parts by mass or more based on 100 parts by mass of the rubber component.

At least one rubber selected from the group consisting of the isoprene-based rubber and the butadiene unit-containing rubber is preferably a modified rubber modified with a complex of a nitrogen-containing aromatic compound and a boron compound having a B-H bond.

The nitrogen-containing aromatic compound is preferably at least one selected from the group consisting of pyridine, quinoxaline, pyrrole, pyrazine, pyrimidine, pyridazine, thiazole, oxazole, imidazole, pyrazole, isoxazole, isothiazole, triazole, furazan, oxadithiazole, thiadiazole, dioxazole, and dithiazole.

The cross-linked rubber preferably has a cross-linking site bonded via boron-oxygen bond.

The cross-linking site preferably comprises a group having a diboronic acid ester skeleton unit.

The rubber member is preferably one selected from a cap tread, a base tread, a sidewall, a clinch apex, a wing, and an inner liner, particularly preferably a cap tread.

In the present specification, numerical values of upper limits and lower limits relating to "or more", "or less", and "to" for descriptions of numerical ranges are numerical values that can be arbitrarily combined, and additionally, numerical values in Examples can be combined with the upper limits and the lower limits. Moreover, when a numerical range is specified by using "to", it means to include numerical values of both ends, unless otherwise specified. Furthermore, in the present specification, the numerical range shown to include the values of both ends is interpreted as simultaneously showing a numerical range not including the value of one end among the values of both ends, and further, a numerical range not including both values of both ends, unless contrary to the purpose of the present invention.

[Definitions]

A "standardized state" is a state where a tire is rim-assembled on a standardized rim and air under a standardized

internal pressure is filled, and no load is applied.

A "dimension of each part of a tire" is, for one appearing on the outer surface of the tire, a value specified in a standardized condition unless otherwise specified, while it is, for one present inside the tire or on a tire cutting surface, a value specified in a condition where, for example, the tire is cut on a plane including a tire rotation axis and the cut tire piece is held to a rim width of a standardized rim.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity WL calculated separately is defined as a standardized load.

The "maximum load capacity WL" is calculated by the following equations. Wherein "V" is a virtual volume, in mm3, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load.

$$W_L = 0.000011 \times V + 175$$

$$V = \{(Dt/2)^2 - (Dt/2 - Ht)^2\} \times \pi \times Wt$$

A "thickness of a rubber member" is the maximum thickness, in mm, of the tire member on a cross section of the tire taken along a plane including a tire rotation axis. The maximum thickness is measured by preparing a tire piece obtained by cutting the tire along the plane including the tire rotation axis, with a space between beads of the tire piece held to a standardized rim width. The thickness shall be an average value of respective thicknesses measured at five locations by rotating the tire by 72°.

When thickness of a tire member is substantially uniform on the cross section of the tire, a thickness at a predetermined location shall be the thickness of the tire member. That is, (1) for members whose thickness in a tire radial direction can be recognized on a tire center line, the thickness is regarded as the thickness of the member, and (2) among tire members whose thickness cannot be recognized as described in (1), for members whose thickness can be recognized at the tire maximum width position in a tire rotation axis direction, the thickness is regarded as the thickness of the member. Examples of the tire members as described in (1) include a cap tread, a base tread, a full band, a belt, a carcass, an inner liner, and the like, and examples of the tire members as described in (2) include a sidewall and the like.

On the other hand, when thickness of a tire member varies on the cross section of the tire, a thickness is determined taking into consideration a normal thickness recognition method for the tire members. Examples of such tire members include a clinch apex, a wing, and the like.

A "thickness of a cap tread" is a thickness in a tire radial direction on a tire center line on a cross section of a tire taken along a plane including a tire rotation axis. It corresponds to T1 in FIG. 1.

A "thickness of an inner liner" is a thickness in a tire radial direction on a tire center line on a cross section of a tire taken along a plane including a tire rotation axis. It corresponds to T3 in FIG. 1.

A "thickness of a sidewall" is a thickness at the tire maximum width position in a tire rotation axis direction on a cross section of a tire taken along a plane including a tire rotational axis. It corresponds to T4 in FIG. 1.

A "thickness of a clinch apex" is a thickness measured along a normal line of a main body of a carcass that passes through a point where a sidewall and the clinch apex come into contact with each other on an outer surface of a tire. In FIG. 1, P1 is a point where the sidewall and the clinch apex come into contact with each other on the outer surface of the tire, L1 is a normal line of the main body of the carcass that passes through the point P1, and T5 is a thickness of the clinch apex as measured along the normal line L1.

A "thickness of a wing" is a thickness measured along a normal line of an outer surface of a tire that passes through a point where a contour line of a tread on an outer side in a tire width direction intersects with a contour line of a sidewall on an outer side in a tire radial direction. In FIG. 1, P2 is a point where the contour line of the tread on the outer side in the tire width direction intersects with the contour line of the sidewall on the outer side in the tire radial direction, L2 is a normal line of the outer surface of the tire that passes through the point P2, and T6 is a thickness of the wing as measured along the normal line L2.

A "plasticizing agent" is a material that imparts plasticity to the rubber component, and has a concept that includes both a plasticizing agent in liquid (in a liquid state) at 25°C and a plasticizing agent that is solid at 25°C. Examples of the plasticizing agent include, resin, oil, a liquid rubber, an ester-based plasticizing agent, and the like. A "content of a plasticizing agent" also includes an amount of a plasticizing agent in a rubber component extended by the plasticizing agent.

[Measuring method]

A "styrene content" is calculated by pyrolysis gas chromatography or NMR measurement ($^1$H-NMR or $^{13}$C-NMR). Unlike physical property values such as a complex elastic modulus (E*) and the like, an amount of a component such as the "styrene content" has a true value that is independent of a measuring method, so it is preferable to use a measuring method with as high accuracy as possible. Besides, in the present specification, "pyrolysis gas chromatography" refers to a method of heating a sample in a pyrolyzer, separating individual components contained in gas phase generated by this heating using a separation column, and analyzing each separated component.

A "vinyl content (1,2-bond butadiene unit amount)" is calculated by pyrolysis gas chromatography or NMR measurement ($^1$H-NMR or $^{13}$C-NMR). Similarly with the "styrene content", the "vinyl content" has a true value that is independent of a measuring method, so it is preferable to use a measuring method with as high accuracy as possible.

A "cis content (cis-1,4-bond butadiene unit amount)" is a value measured by infrared absorption spectrometry or NMR measurement ($^1$H-NMR or $^{13}$C-NMR) according to JIS K 6239-2:2017 and is applied to, for example, a rubber component having a repeating unit derived from butadiene such as a BR and the like. Similarly with the "styrene content", the "cis content" has a true value that is independent of a measuring method, so it is preferable to use a measuring method with as high accuracy as possible.

A "glass transition temperature Tg" is a value calculated by differential scanning calorimetry (DSC) in accordance with JIS K 7121 and is applied to, for example, an SBR. For example, when the SBR comprises an extending oil, measurement is performed on a sample obtained after removing the extending oil with acetone in accordance with JIS K 6229.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "nitrogen adsorption specific surface area ($N_2SA$) of carbon black" is measured according to JIS K 6217-2:2017.

A "nitrogen adsorption specific surface area ($N_2SA$) of silica" is measured by the BET method according to ASTM D3037-93.

An "average primary particle size" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of $\{4 \times (\text{area of particle})/\pi\}$) is calculated from the microscope image to be defined as a particle size. The average primary particle size is applied to silica, carbon black, etc.

A "softening point of resin" is a temperature at which a sphere drops when the softening point specified in JIS K 6220-1:2015 7.7 is measured with a ring and ball softening point measuring device.

[Tire]

A tire that is one embodiment of the present invention will be described below with reference to the drawings as appropriate. However, the drawings used are merely intended to specifically show one embodiment, and the present invention is not limited to these drawings.

The tire relating to the present embodiment is a tire comprising at least one rubber member composed of a specified cross-linked rubber, wherein the tire satisfies the following inequalities, where $A_{IR}$ represents a content, in % by mass, of an isoprene-based rubber in a rubber component contained in the cross-linked rubber, $A_{BD}$ represents a content, in % by mass, of a butadiene unit-containing rubber in the rubber component, and T represents a thickness, in mm, of the rubber member:

(1)

$$A_{IR}+A_{BD}>70,$$

(2)

$$(A_{IR}+A_{BD})/T>10.0,$$

(provided that $A_{IR}>10$, $A_{BD}>L0$).

The rubber member composed of the specified cross-linked rubber is not particularly limited, examples of which can include a variety of tire members. Specifically, examples of the rubber member include a cap tread, a base tread, a sidewall, a clinch apex, a wing, an inner liner, and the like. Among them, a cap tread and the like are preferable.

FIG. 1 is a schematic view showing a part of a cross section (upper right part of the cross section) of a tire relating to the present embodiment, taken along a plane including a tire rotation axis. FIG. 1 shows a cap tread 1, an inner liner 3, a sidewall 4, a clinch apex 5, and a wing 6. Besides, in FIG. 1, a thickness of the cap tread is denoted by T1, a thickness of the inner liner 3 is denoted by T3, a thickness of the sidewall 4 is denoted by T4, a thickness of the clinch apex 5 is denoted by T5, and a thickness of the wing 6 is denoted by T6.

<Inequality (1)>

A value on the right side in the inequality (1) is preferably 75, more preferably 80, further preferably 85, further preferably 90, further preferably 95. It is particularly preferable that a value of $A_{IR}+A_{BD}$ on the left side in the inequality (1) is 100.

Regarding the inequality (1), $A_{IR}+A_{BD}$ that is a value on the left side can be adjusted by increasing or decreasing the content of the isoprene-based rubber and/or the content of the butadiene unit-containing rubber, respectively.

$A_{IR}$ that is a content, in % by mass, of the isoprene-based rubber in the rubber component is greater than 10, and a preferred range thereof is mentioned below. Moreover, $A_{BD}$ that is a content, in % by mass, of the butadiene unit-containing rubber in the rubber component is greater than 10, and a preferable value thereof is mentioned below. Here, $A_{IR}$, in % by mass, is a total content of IR-based rubbers including specifically modified IR-based rubbers, and $A_{BD}$, in % by mass, is a total content of butadiene unit-containing rubbers including specifically modified butadiene unit-containing rubbers.

<Inequality (2)>

The value on the right side in the inequality (2) is preferably 11.0, more preferably 12.0, further preferably 13.0, further preferably 14.0. There is no particular limit to an upper limit of a value of $(A_{IR}+A_{BD})/T$ on the left side in the inequality (2), but the value can vary depending on a type of a rubber member, and in a case where the rubber member is an inner liner that can be the thinnest, it is, for example, about 200.

Regarding the left side in the inequality (2), $A_{IR}+A_{BD}$ that is a numerator corresponds to the left side in the inequality (1), and therefore, adjustment thereof is the same as described above. On the other hand, T that is a denominator is a thickness of a rubber member, and therefore, it can be adjusted by increasing or decreasing the thickness of the rubber member. Thus, $(A_{IR}+A_{BD})/T$ that is a value on the left side in the inequality (2) can be adjusted by appropriately increasing or decreasing the numerator and the denominator.

The value of T is preferably 0.5 mm or more, more preferably 0.7 mm or more, further preferably 1 mm or more. On the other hand, the value is preferably 10 mm or less, more preferably less than 10 mm, further preferably 9 mm or less, further preferably 8 mm or less.

The value of T may vary depending on a type of a rubber member. In a case of a cap tread, for example, a thickness of the cap tread is preferably 3 mm or more, more preferably 4 mm or more, further preferably 5 mm or more. An upper limit is not particularly limited, but the value is preferably 10 mm or less, more preferably less than 10 mm, further preferably 9 mm or less, further preferably 8 mm or less.

In a case of an inner liner, for example, a thickness of the inner liner is preferably 0.5 mm or more, more preferably 0.7 mm or more, further preferably 1 mm or more. An upper limit is not particularly limited, but the value is preferably 2.5 mm or less, more preferably 2 mm or less, further preferably 1.5 mm or less.

In a case of a sidewall, for example, a thickness of the sidewall is preferably 2 mm or more, more preferably 2.5 mm or more, further preferably 3 mm or more. An upper limit is not particularly limited, but the value is preferably 6 mm or less, more preferably 5.5 mm or less, further preferably 4 mm or less.

In a case of a wing, for example, a thickness of the wings is preferably 3 mm or more, more preferably 3.5 mm or more, further preferably 4 mm or more. An upper limit is not particularly limited, but the value is preferably 5 mm or less, more preferably 4.5 mm or less, further preferably 4.3 mm or less.

In a case of a clinch apex, for example, a thickness of the clinch apex is preferably 4 mm or more, more preferably 4.5 mm or more, further preferably 5 mm or more. An upper limit is not particularly limited, but the value is preferably 8 mm or less, more preferably 7 mm or less, further preferably 6 mm or less.

Thus, for example, when $A_{IR}+A_{BD}$ is 100% by mass, a range of the value on the left side in the inequality (2) is accordingly determined from the range of the value of T as described above. In this case, the term "or less" relating to the upper limit of the value of T as described above can be read as "less than" if necessary for consistency with the inequality sign in the inequality (2).

[Cross-linked rubber]

A cross-linked rubber constituting a rubber member of the tire relating to the present embodiment will be described below. The cross-linked rubber comprises a rubber component comprising an isoprene-based rubber and a butadiene unit-containing rubber, silica, and a cross-linking agent, and the cross-linked rubber has a boron atom-containing group.

The cross-linked rubber having the boron atom-containing group can be obtained, for example, by using, as a raw material of the cross-linked rubber, (1) a diene-based rubber previously modified with a group containing a boron atom (hereinafter referred to as a "specifically modified diene-based rubber") for at least a part of the rubber component to form a cross-linking site containing boron atom, or (2), in a case where the rubber component does not comprise any specifically modified diene rubber, a compound that forms a cross-linking site containing boron atom (hereinafter referred to as a "boron crosslink-forming compound") to form a cross-linking site containing boron atom. Moreover, the above-described (1) and (2) may be used in combination. In the cross-linked rubber having the boron atom-containing group thus obtained, presence of the boron atom-containing group enhances cross-linking with double bonds of a polymer and enhances interaction with silica, which is thereby considered to contribute to development of the effects of the present invention. Examples of the cross-linking site containing boron atom include a cross-linking site bonded via boron-oxygen bond, a cross-linking site bonded via boron-sulfur bond, a cross-linking site bonded via boron-carbon bond, a cross-linking site bonded via boron-nitrogen bond, and the like. Thus, it is preferable that the cross-linked rubber having the boron atom-containing group has these cross-linking sites. Among them, the cross-linked rubber having the boron atom-containing group preferably has a cross-linking site bonded via boron-oxygen bond.

When the boron crosslink-forming compound is used as the raw material of the cross-linked rubber, a content of boron is preferably 0.3 parts by mass or more, more preferably 0.5 parts by mass or more, further preferably 1.0 parts by mass or more, further preferably 1.5 parts by mass or more, based on 100 parts by mass of the rubber component, from the viewpoint of the effects of the present invention. There is no particular limit to an upper limit of the content of boron, but usually, a content of 5 parts by mass is sufficient.

<Rubber component>

The rubber component is a rubber component comprising an isoprene-based rubber (an IR-based rubber) and a butadiene unit-containing rubber.

Examples of the butadiene unit-containing rubber include diene-based rubbers such as a styrene-butadiene rubber (SBR), a butadiene rubber (BR), a styrene-isoprene-butadiene rubber (SIBR), an acrylonitrile-butadiene rubber (NBR), and the like. The butadiene unit-containing rubber may be used alone, or two or more thereof may be used in combination. The butadiene unit-containing rubber preferably comprises an SBR, and preferably comprises an SBR and a BR.

The rubber component may also include diene-based rubbers such as a chloroprene rubber (CR) and the like, as well as non-diene-based rubbers such as a butyl-based rubber, an ethylene-propylene rubber, a polynorbornene rubber, a

silicone rubber, a polyethylene chloride rubber, a fluororubber (FKM), an acrylic rubber (ACM), a hydrin rubber, and the like. These diene-based rubbers and non-diene-based rubbers may be used alone, or two or more thereof may be used in combination, respectively.

The rubber component may be one consisting of an IR-based rubber and an SBR, or may be one consisting of an IR-based rubber, an SBR, and a BR.

(Specially modified diene-based rubber)

At least one of the above-described diene-based rubbers is preferably a diene-based rubber modified with a group containing a boron atom, that is, a specifically modified diene-based rubber. The specifically modified diene-based rubber may be used alone, or two or more thereof may be used in combination.

The specifically modified diene-based rubber can be obtained by various methods, but typically, it can be obtained by treating a diene-based rubber with a borane complex. Examples of such a borane complex can include, for example, a complex of a nitrogen-containing aromatic compound and a boron compound having a B-H bond. Examples of the nitrogen-containing aromatic compound include at least one selected from the group consisting of pyridine, quinoxaline, pyrrole, pyrazine, pyrimidine, pyridazine, thiazole, oxazole, imidazole, pyrazole, isoxazole, isothiazole, triazole, furazan, oxadithiazole, thiadiazole, dioxazole, and dithiazole. These nitrogen-containing aromatic compounds may have a substituent (for example, an alkyl group having 1 to 10 carbon atoms). The boron compound having the B-H bond may be any compound having at least one B-H bond, and examples of such a compound include, for example, borane ($BH_3$), alkylborane, dialkylborane, arylborane, diarylborane, alkylarylborane, and the like. Examples of the borane complex can include pyridine borane, picoline borane, pyrrole borane, aniline borane, and the like.

The complex of the nitrogen-containing aromatic compound and the borane compound produces a boron atom-containing group in a cross-linked rubber by binding boron to a double-bond part of the polymer and strongly interacting nitrogen-containing aromatic compound part with a filler such as silica and the like. It is considered that an effect of the present invention to improve fuel efficiency is exhibited because dispersibility of the filler is improved.

When the specifically modified diene-based rubber is used as the raw material of the cross-linked rubber, a content of boron is preferably 0.05 parts by mass or more, more preferably 0.07 parts by mass or more, further preferably 0.09 parts by mass or more, based on 100 parts by mass of the rubber component, from the viewpoint of the effects of the present invention. On the other hand, there is no particular limit to an upper limit of the content, but usually, a content of 0.3 parts by mass is enough for exhibiting a sufficient effect.

As the specifically modified diene-based rubber, specifically modified IR-based rubbers, for example, a specifically modified NR, a specifically modified SBR, a specifically modified BR, and the like can be appropriately used.

(Boron crosslink-forming compound)

Instead of using a specifically modified diene-based rubber, or in addition to a specifically modified diene-based rubber, a boron crosslink-forming compound can be used. This is because a cross-linked rubber having a boron atom-containing group can also be obtained by such a compound.

As the boron crosslink-forming compound, any compound can be used so long as a cross-linked rubber having a boron atom-containing group can be obtained by the compound. Here, examples of the cross-linked rubber having the boron atom-containing group include, for example, a cross-linked rubber having a cross-linking site bonded via boron-oxygen bond. It is preferable that the cross-linking site is one comprising a group having a diboronic acid ester skeleton unit. Examples of a compound that forms such a cross-linking site can include, for example, a diboronic acid ester compound represented by the formula:

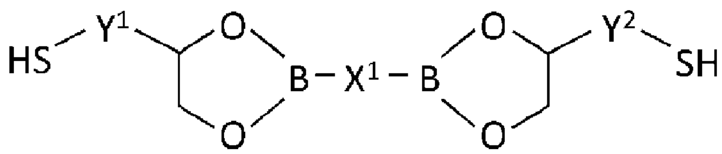

(provided that $X^1$ is a single bond or any divalent group, and Y’ and $Y^2$ are each independently a single bond or a divalent hydrocarbon group).

The compound has a functional group (a mercapto group) that bonds with double bonds of a polymer, so that it can be used as a cross-linking agent. When the diboronic acid ester compound is used to cross-link polymers, a cross-linking site includes a diboronic acid ester backbone unit represented by the following partial structural formula:

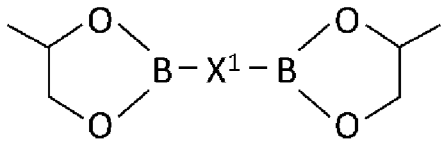

(wherein the symbols have the same meanings as those described above).

Examples of the divalent group of $X^1$ include, for example: linear or branched aliphatic groups having 1 to 10 carbon atoms (an alkylene group, an alkenylene groups, an alkynylene groups); aromatic groups having 6 to 20 carbon atoms (a 1,2-phenylene group, a 1,3-phenylene group, a 1,4-phenylene group, a 1,4-naphthylene group, a 1,5-naphthylene group, a 2,6-naphthylene group, a 4,4'-biphenylene group, and the like); and the like. The aliphatic group and the aromatic group may be intervened by -O-, -S-, -O-C(=O)-, -C(=O)-O-, -O-C(=O)-O-, $-NR^1-C(=O)-$, $-C(=O)-NR^1-$, $-NR^1-$, or -C(=O)-. Besides, $R^1$ represents a hydrogen atom or an alkyl group having 1 to 6 carbon atoms. Preferred examples of $X^1$ can include a 1,4-phenylene group. Moreover, examples of the divalent hydrocarbon group of Y' and $Y^2$ can include an alkylene group having 1 to 3 carbon atoms. Among them, a methylene group is preferable.

The boron crosslink-forming compound may be used alone, or two or more thereof may be used in combination.

A content of the boron crosslink-forming compound is preferably greater than 0 part by mass, more preferably greater than 1 part by mass, further preferably greater than 2 parts by mass, further preferably greater than 3 parts by mass, further preferably 5 parts by mass or more, based on 100 parts by mass of the rubber component. On the other hand, the content is preferably less than 50 parts by mass, more preferably less than 40 parts by mass, further preferably less than 35 parts by mass, further preferably less than 30 parts by mass.

(Radical initiator)

When a boron crosslink-forming compound is compounded, it is preferable to compound a radical initiator. Examples of the radical initiator include, for example: inorganic peroxides such as potassium persulfate, sodium persulfate, ammonium persulfate, potassium perphosphate, hydrogen peroxide, and the like; organic peroxides such as t-butyl peroxide, cumene hydroperoxide, p-menthane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, t-butylperoxyisobutyrate, and the like; azo compounds such as 2,2'-azobisisobutyronitrile (AIBN), azobis-2,4-dimethylvaleronitrile, azobiscyclohexanecarbonitrile, methyl azobisisobutyrate, and the like; and the like. These radical initiators may be used alone, or two or more thereof may be used in combination. Among them, the radical initiator is preferably an azo compound, more preferably 2,2'-azobisisobutyronitrile.

A compounding amount of a radical initiator is, but not particularly limited to, preferably greater than 0.05 parts by mass, more preferably greater than 0.07 parts by mass, further preferably 0.1 parts by mass or more, based on 100 parts by mass of the rubber component. On the other hand, for example, a compounding amount of 3 parts by mass is sufficient.

(IR-based rubber)

Examples of the IR-based rubber include a natural rubber (NR), an isoprene rubber (IR), a refined NR, a modified NR, a modified IR, and the like. As the NR, those common in the tire industry such as, for example, SIR20, RSS#3, TSR20, SVR-L, and the like can be used. The IR is not particularly limited, and those common in the tire industry such as, for example, IR 2200 and the like can be used. Examples of the refined NR include a deproteinized natural rubber (DPNR), an ultra pure natural rubber (UPNR), and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. The isoprene-based rubber may be used alone, or two or more thereof may be used in combination.

(SBR)

The styrene-butadiene rubber (SBR) is not particularly limited, examples of which include, for example, an unmodified emulsion-polymerized styrene-butadiene rubber (E-SBR) and an unmodified solution-polymerized styrene-butadiene rubber (S-SBR), as well as modified SBRs obtained by modifying them, such as a modified emulsion-polymerized styrene-butadiene rubber (modified E-SBR) and a modified solution-polymerized styrene-butadiene rubber (modified S-SBR). Examples of the modified SBR include a modified SBR modified at its terminal and/or main chain, a modified SBR coupled with tin, a silicon compound, etc. (a modified SBR of condensate or having a branched structure, etc.), and the like. Moreover, the modified SBR also includes an SBR modified with a borane complex mentioned below. Furthermore, hydrogenated ones of these SBRs (hydrogenated SBRs) and the like can also be used. Moreover, as SBRs,

there are oil-extended type SBRs, in which an extending oil is added to adjust flexibility, and non-oil-extended type SBRs, in which no extending oil is added, both of which can be used. As such SBRs, for example, those manufactured by JSR Corporation, Asahi Kasei Chemicals Co., Ltd., Zeon Corporation, ZS Elastomer Co., Ltd., etc. can be used. An SBR can be used alone, or two or more thereof can be used in combination.

A styrene content of an SBR is preferably greater than 15% by mass, more preferably greater than 20% by mass, further preferably greater than 23% by mass. Moreover, the styrene content is preferably less than 40% by mass, more preferably less than 35% by mass, further preferably less than 30% by mass, from the viewpoint of fuel efficiency. Besides, the styrene content of the SBR is a value measured by the above-described method.

A vinyl content (1,2-bond butadiene unit amount) of an SBR is preferably greater than 10 mol%, more preferably greater than 30 mol%, further preferably greater than 50 mol%. Moreover, the vinyl content is preferably less than 80 mol%, more preferably less than 70 mol%, further preferably less than 60 mol%. Besides, the vinyl content of the SBR is a value measured by the above-described measuring method.

(BR)

The BR is not particularly limited, examples of which include, for example, those commonly used in the tire industry, such as a BR having a high cis content, a BR containing an 1,2-syndiotactic polybutadiene crystal (SPB-containing BR), a butadiene rubber synthesized using a rare-earth element-based catalyst (rare-earth-based BR), a tin-modified butadiene rubber modified with a tin compound (tin-modified BR), other modified butadiene rubbers (modified BR), and the like. As commercially available products of the BRs, products from UBE Corporation, JSR Corporation, Asahi Kasei Corporation, Zeon Corporation, etc. can be used. The modified BR may be any BR having a functional group that interacts with a filler such as silica and the like, examples of which include, for example, a terminal-modified BR in which at least one terminal of a BR is modified with a compound (modifying agent) having the above-described functional group (terminal-modified BR having the above-described functional group at the terminal), a main chain-modified BR having the above-described functional group at the main chain, a main chain terminal-modified BR having the above-described functional groups at the main chain and terminal (for example, a main chain terminal-modified BR having the above-described functional group at the main chain and in which at least one terminal of the BR is modified with the above-described modifying agent), a terminal-modified BR which is modified (coupled) with a polyfunctional compound having two or more epoxy groups in a molecule and is introduced with a hydroxyl group or an epoxy group, and the like. Examples of the above-described functional group include, for example, an amino group, an amide group, a silyl group, an alkoxysilyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. Besides, these functional groups may have a substituent. Among them, an amino group (preferably an amino group in which a hydrogen atom of an amino group is substituted with an alkyl group having 1 to 6 carbon atoms), an alkoxy group (preferably an alkoxy group having 1 to 6 carbon atoms), and an alkoxysilyl group (preferably an alkoxysilyl group having 1 to 6 carbon atoms) are preferable. The BR may be used alone, or two or more thereof may be used in combination.

A cis content of a BR is preferably greater than 25 mol%, more preferably greater than 30 mol%, further preferably greater than 35 mol%. On the other hand, the cis content is preferably less than 60 mol%, more preferably less than 50 mol%, further preferably less than 40 mol%. The cis content of the BR can be measured by the above-described method.

As BRs, for example, products from UBE Corporation, JSR Corporation, Asahi Kasei Corporation, Zeon Corporation, etc. can be used.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a butadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10.

pMC is a ratio of $^{14}C$ concentration of a sample to $^{14}C$ concentration of a modern standard carbon (modern standard reference) and a value used as an index indicating a biomass ratio of a compound. A significance of this value is mentioned below.

In 1 mole of carbon atoms ($6.02\times10^{23}$ pieces), there are about $6.02\times10^{11}$ $^{14}C$ that are about one trillionth of the number of normal carbon atoms. A half-life of $^{14}C$ is 5730 years, and $^{14}C$ regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, a natural gas, and the like do not contain any $^{14}C$ element. Therefore, chemical substances produced using these fossil fuels as raw materials do not contain any $^{14}C$ element as well.

On the other hand, $^{14}C$ is constantly generated by cosmic rays causing nuclear reactions in the atmosphere. Thus, decrease in $^{14}C$ due to radioactive decay and generation of $^{14}C$ due to nuclear reactions are balanced, and the amount of $^{14}C$ has been constant in the Earth's atmospheric environment. Therefore, the $^{14}C$ concentration of substances derived from biomass resources that have been circulating in the current environment becomes a value of about $1\times10^{-12}$ mol% based on total C atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference for the $^{14}C$ concentration. As a specific reference material, an oxalic acid standard provided by NIST (National Institute of Standards and Technology) is used. A specific radioactivity of carbon in this oxalic acid (radioactivity intensity of $^{14}C$ per gram of carbon) is sorted for each carbon isotope, $^{13}C$ is corrected to a constant value, and a value corrected for attenuation from 1950 to the date of measurement is used as a standard $^{14}C$ concentration value (100%). A ratio of this value to a value actually measured for a sample becomes a pMC value.

Thus, if a rubber is produced from a material derived from 100% biomass, the $^{14}C$ concentration shows a value of approximately 110 pMC, often not being equal to 100 under a normal condition currently, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

(Content of each rubber in rubber component)

A content of an IR-based rubber in the rubber component is preferably greater than 10% by mass, more preferably greater than 15% by mass, further preferably 20% by mass or more. On the other hand, the content is preferably less than 90% by mass, more preferably less than 85% by mass, further preferably 80% by mass or less. The content of the IR-based rubber includes a content of a specifically modified IR-based rubber. The IR-based rubber may be one consisting of a specifically modified IR-based rubber.

A content of an SBR in the rubber component is preferably greater than 10% by mass, more preferably greater than 15% by mass, further preferably 20% by mass or more. On the other hand, the content is preferably less than 90% by mass, more preferably less than 85% by mass, further preferably 80% by mass or less. The content of the SBR includes a content of a specifically modified SBR. The SBR may be one consisting of a specifically modified SBR. In another embodiment in which an SBR is a main component of the rubber component, a content of the SBR is, for example, preferably 80% by mass or more, and may be 85% by mass or more.

A content of a BR in the rubber component is preferably less than 50% by mass, more preferably less than 30% by mass, further preferably 20% by mass or less. On the other hand, the content may be 0% by mass, greater than 0% by mass, greater than 10% by mass, or greater than 15% by mass. The content of the BR includes a content of a specifically modified BR. The BR may be one consisting of a specifically modified BR.

<Filler>

The cross-linked rubber comprises silica as a filler. As the filler, those commonly used in the tire industry can be used, such as carbon black and the like, can be used, in addition to silica. Examples of fillers other than silica and carbon black can include aluminum hydroxide, calcium carbonate, alumina, clay, talc, and the like. The filler is preferably one comprising silica and carbon black, and may be one consisting of silica and carbon black. When the filler comprises silica and carbon black, it is preferable that a ratio of a content, in parts by mass, of silica to a content, in parts by mass, of carbon black is greater than 1. The ratio is more preferably greater than 5, further preferably greater than 10, further preferably greater than 12.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. Silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably greater than 50 $m^2/g$, more preferably greater than 100 $m^2/g$, further preferably greater than 150 $m^2/g$, particularly preferably greater than 170 $m^2/g$. Moreover, an upper limit of the $N_2SA$ of silica is, but not particularly limited to, preferably less than 350 $m^2/g$, more preferably less than 250 $m^2/g$, further preferably less than 200 $m^2/g$. When it is within the above-described ranges, cut resistance tends to be improved. Besides, the $N_2SA$ of silica is measured by the above-described measuring method.

An average primary particle size of silica is preferably greater than 10 nm, more preferably greater than 12 nm, further preferably greater than 14 nm, particularly preferably greater than 16 nm, from the viewpoint of the effects of the present invention. Moreover, the average primary particle size is preferably less than 24 nm, more preferably less than 22 nm, further preferably less than 20 nm. Besides, the average primary particle size of silica is measured by the above-described measuring method.

A content of silica when compounded based on 100 parts by mass of the rubber component is, but not particularly limited to, preferably greater than 40 parts by mass, more preferably greater than 50 parts by mass, further preferably greater than 60 parts by mass, from the viewpoint of obtaining effects of the present invention. Moreover, the content is preferably less than 200 parts by mass, more preferably less than 150 parts by mass, further preferably less than 100 parts by mass, from the viewpoints of dispersibility of silica and processability.

(Silane coupling agent)

When silica is used, it is preferable that the rubber composition further comprises a silane coupling agent. The silane coupling agent is not particularly limited, examples of which include, for example, sulfide-based silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, 3-triethoxysilylpropyl methacrylate monosulfide, and the like; mercapto-based silane coupling agents such as 3-mercaptopropyltrimethoxysilane, 2-mercaptoethyltriethoxysilane, NXT and NXT-Z manufactured by Momentive Performance Materials, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. As commercially available products, products from Evonik Industries AG, Momentive Performance Materials, Shin-Etsu Chemical Co., Ltd., Tokyo Chemical Industry Co., Ltd., AZmax.co, Dow Corning Toray Co., Ltd., etc. can be used. The silane coupling agent may be used alone, or two or more thereof may be used in combination.

A content of a silane coupling agent when compounded is preferably greater than 1 part by mass, more preferably greater than 3 parts by mass, further preferably greater than 5 parts by mass, further preferably greater than 7 parts by mass, based on 100 parts by mass of silica. On the other hand, the content is preferably less than 20 parts by mass, more preferably less than 18 parts by mass, further preferably less than 16 parts by mass, further preferably less than 14 parts by mass. When it is within the above-described ranges, dispersibility of silica tends to be improved.

(Carbon black)

Examples of carbon black include, but not particularly limited to, N134, N110, N220, N234, N219, N339, N330, N326, N351, N550, N660, N762, and the like. A raw material of carbon black may be a biomass material such as lignin, a vegetable oil, and the like, from the viewpoint of life cycle assessment. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Chemical & Material Co., Ltd., Columbia Chemical Corporation, etc. can be used. Carbon black may be used alone, or two or more thereof may be used in combination.

An average primary particle size of carbon black is preferably greater than 15 nm, more preferably greater than 18 nm, further preferably greater than 20 nm. On the other hand, the average primary particle size is preferably less than 50 nm, more preferably less than 40 nm, further preferably less than 30 nm. Besides, the average primary particle size of carbon black is measured by the above-described measuring method.

A nitrogen adsorption specific surface area ($N_2SA$) of carbon black is, but not particularly limited to, preferably greater than 30 $m^2/g$, more preferably greater than 60 $m^2/g$, further preferably greater than 80 $m^2/g$, further preferably greater than 100 $m^2/g$, from the viewpoint of obtaining a sufficient reinforcing property and a good abrasion resistance. Moreover, the $N_2SA$ is preferably less than 300 $m^2/g$, more preferably less than 200 $m^2/g$, further preferably less than 150 $m^2/g$, further preferably less than 120 $m^2/g$, from the viewpoints of an excellent dispersibility and unlikeliness for heat generation. Besides, the $N_2SA$ of carbon black in the present specification is a value measured by the above-described method.

Carbon black may include a recovered carbon black. The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of

an organic material ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP 3173251 A, carbon black comprising a hydroxyl and/or carboxyl group on its surface is obtained by treating carbon black obtained from a pyrolysis process with potassium permanganate under an acidic condition. Moreover, in JP6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group. The recovered carbon black may be used alone, or two or more thereof may be used in combination.

A content of carbon black is, for example, greater than 1 part by mass, preferably greater than 3 parts by mass, more preferably 5 parts by mass or more, based on 100 parts by mass of the rubber component. On the other hand, the total content is preferably less than 200 parts by mass, more preferably less than 15 parts by mass, further preferably less than 10 parts by mass. When the content of carbon black is within the above-described ranges, a sufficient reinforcing property and a good dispersion in a rubber are obtained, and a sufficient grip performance tends to be obtained.

(Other compounding agents)

The rubber composition can appropriately comprise compounding agents conventionally and commonly used in the tire industry, for example, a plasticizing agent, a compatibilizer, processing aid, a vulcanized rubber particle, wax, stearic acid, zinc oxide, an antioxidant, a cross-linking agent, a vulcanization accelerator, and the like, in addition to the rubber components and the fillers.

(Plasticizing agent)

The plasticizing agent is a material that imparts plasticity to the rubber component, and has a concept that includes both a plasticizing agent in a liquid state at 25°C and a plasticizing agent that is solid at 25°C. Examples of the plasticizing agent include, resin, oil, a liquid rubber, an ester-based plasticizing agent, and the like. These plasticizing agents may be ones derived from mineral resources such as petroleum, a natural gas, and the like, or naphtha-derived ones recycled from a rubber product or a non-rubber product. Moreover, low-molecular-weight hydrocarbon components obtained by pyrolyzing used tires or products containing these agents and performing extraction from the pyrolysate may be used as plasticizing agents. The plasticizing agent may be used alone, or two or more thereof may be used in combination.

<<Resin>>

Among the other compounding agents described above, the rubber composition preferably comprises resin. Resin is not particularly limited, and resin commonly used in the tire industry can be used, examples of which include, for example, an aromatic vinyl-based resin, a dicyclopentadiene-based resin, a C9-based resin, a C5-based resin, a C5/C9-based resin, a terpene-based resin, a rosin-based resin, a phenol-based resin, and the like. Among them, an aromatic vinyl-based resin, a dicyclopentadiene-based resin, a C5/C9-based resin, and a terpene-based resin are preferable, and a C5/C9-based resin is more preferable. Resin may be used alone, or two or more thereof may be used in combination.

· Aromatic vinyl-based resin

An "aromatic vinyl-based resin" refers to resin comprising at least one aromatic vinyl compound selected from the group consisting of styrene, α-methylstyrene, vinyltoluene, p-chlorostyrene, and the like as a monomer component having the largest content, preferably 50 mol% or more, and may be one obtained by hydrogenating or modifying them. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used. The resin may be used alone, or two or more thereof may be used in combination.

· Dicyclopentadiene-based resin

A "dicyclopentadiene-based resin" refers to resin comprising dicyclopentadiene (DCPD) as a monomer component having the largest content and may be one obtained by hydrogenating or modifying it. Examples of the dicyclopentadiene-based resin include, for example, a DCPD/C9 resin obtained by copolymerizing dicyclopentadiene with the C9 fraction, and the like. Among them, a DCPD/C9 resin is preferable. As the DCPD resin, for example, those commercially available from Exxon Mobil Corporation, ENEOS Corporation, Zeon Corporation, Maruzen Petrochemical Co., Ltd., etc. can be used. The resin may be used alone, or two or more thereof may be used in combination.

· C9-based resin

A "C9-based resin" refers to resin obtained by polymerizing C9 fractions and may be a polymer obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, it may be one obtained by hydrogenating or modifying them. Examples of the C9 fraction include, for example, a petroleum fraction having 8 to 10 carbon atoms, which is at least one selected from the group consisting of vinyltoluene, alkylstyrene, coumarone, indene, methylindene, dicyclopentadiene, and the like. Specific examples of the C9-based resin include, for example, a coumarone-indene resin, a coumarone resin, an indene resin, and the like. The resin may be used alone, or two or more thereof may be used in combination.

· C5-bases resin

A "C5-based resin" refers to resin obtained by polymerizing a C5 fraction other than dicyclopentadiene, and may be one obtained by hydrogenating or modifying them. Examples of the C5 fraction other than dicyclopentadiene include, for example, a petroleum fraction having 4 to 5 carbon atoms, which is at least one selected from the group consisting of cyclopentadiene, isoprene, pentane, isopentane, neopentane, pentene, pentadiene, and the like. The resin may be used alone, or two or more thereof may be used in combination.

· C5/C9-based resin

A "C5/C9-based resin" refers to resin obtained by copolymerizing the C5 fraction and the C9 fraction and may be one obtained by hydrogenating or modifying them. As the C5/C9-based resin, for example, those commercially available from Tosoh Corporation, Zibo Luhua Hongjin New Material Group Co., Ltd, etc. can be appropriately used. The resin may be used alone, or two or more thereof may be used in combination.

· Terpene-based resin

The terpene-based resin refers to a resin comprising a terpene compound of at least one selected from the group consisting of such as α-pinene, β-pinene, limonene, dipentene, and the like as a monomer component having the largest content, preferably 50 mol% or more, and may be one obtained by hydrogenating or modifying them. Specific examples of the terpene-based resin include, for example, a polyterpene resin only comprising one or more of the terpene compounds as monomer components; an aromatic-modified terpene resin comprising the terpene compound and an aromatic compound as monomer components; a terpene phenolic resin comprising the terpene compound and a phenol-based compound as monomer components; and the like. Examples of the aromatic compound used as a monomer component for the aromatic-modified terpene resin include, for example, at least one selected from the group consisting of styrene, α-methylstyrene, vinyltoluene, divinyltoluene, and the like. Examples of the phenol-based compound used as a monomer component for the terpene phenolic resin include, for example, at least one selected from the group consisting of phenol, bisphenol A, cresol, xylenol, and the like. The resin may be used alone, or two or more thereof may be used in combination.

· Rosin-based resin

The rosin-based resin refers to resin comprising a rosin acid compound of at least one selected from the group consisting of abietic acid, neoabietic acid, palustric acid, isopimaric acid, and the like, preferably as a monomer component having the largest content, more preferably 50 mol% or more, and may be one obtained by hydrogenating or modifying them. Example of the rosin-based resin include, but not particularly limited to, for example, a natural resin rosin and a rosin-modified resin obtained by modifying it by hydrogenation, disproportionation, dimerization, esterification, etc., and the like. The resin may be used alone, or two or more thereof may be used in combination.

· Phenol-based resin

A phenol-based resin refers to a resin comprising a phenolic compound such as phenol, cresol, and the like as a monomer component having the largest content, preferably 50 mol% or more. Examples of the phenol-based resin include, but not particularly limited to, a phenol formaldehyde resin, an alkylphenol formaldehyde resin, an alkylphenol acetylene resin, an oil-modified phenol formaldehyde resin, and the like. The resin may be used alone, or two or more thereof may be used in combination.

A softening point of resin is preferably 60°C or higher, more preferably 75°C or higher, further preferably 90°C or higher, from the viewpoint of grip performance. Moreover, it is preferably 150°C or lower, more preferably 120°C or lower, further preferably 100°C or lower, from the viewpoints of processability and improvement of dispersibility of a rubber component with a filler. Besides, a softening point of resin is measured by the above-described measuring method.

A content of resin when compounded based on 100 parts by mass of the rubber component is preferably greater than 1 part by mass, more preferably 2 parts by mass or more, further preferably 3 parts by mass or more. On the other hand, the content is preferably less than 15 parts by mass, more preferably less than 10 parts by mass, further preferably less than 5 parts by mass, from the viewpoint of suppressing heat generation.

<<Oil>>

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant, may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like. The mineral oil may be used alone, or two or more thereof may be used in combination.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C. The vegetable oil may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, $^1$H-NMR measurement. For example, a heavy chloroform in which a rubber composition containing triacylglycerol is immersed at 25°C for 24 hours and then removed is subjected to $^1$H-NMR at room temperature, and signals near 5.26 ppm, near 4.28 ppm, and near 4.15 ppm are observed under a condition that a signal of tetramethylsilane (TMS) is set to 0.00 ppm. The signals are presumed to be derived from hydrogen atoms bonded to carbon atoms adjacent to oxygen atoms of an ester group. Besides, "near" in this paragraph shall be a range of $\pm$0.10 ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil

modified by transesterification or the like may be used. Moreover, in order to produce a vegetable oil comprising such fatty acid, a plant may be improved by selective breeding, gene recombination, genome editing, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, an oleyl alcohol that can be derived therefrom, and the like.

A content of oil based on 100 parts by mass of the rubber component is preferably greater than 3 parts by mass, more preferably greater than 5 parts by mass, further preferably 10 parts by mass or more. Moreover, the content is preferably less than 30 parts by mass, more preferably less than 20 parts by mass, further preferably 15 parts by mass or less, further preferably 10 parts by mass or less. Besides, the content of oil includes an amount of oil contained in the rubber component as an extending oil and an amount of oil contained in other components such as sulfur and the like.

<<Liquid rubber>>

The liquid rubber is a polymer in a liquid state at 25°C, examples of which include, for example, a liquid diene-based polymer and the like. Examples of the liquid diene-based polymer include a liquid styrene-butadiene copolymer (a liquid SBR), a liquid butadiene polymer (a liquid BR), a liquid isoprene polymer (a liquid IR), a liquid styrene-isoprene copolymer (a liquid SIR), and the like. The liquid diene-based polymer preferably has a number average molecular weight (Mn), in terms of polystyrene, as measured by gel permeation chromatography (GPC), of preferably greater than 1000, more preferably greater than 3000. On the other hand, the Mn is preferably less than 100000, more preferably less than 15000. The Mn of the liquid rubber is a value in terms of polystyrene as measured by gel permeation chromatography (GPC). As the liquid diene-based polymer, for example, products from Sartomer, Kuraray Co., Ltd., etc. can be used. The liquid rubber may be used alone, or two or more thereof may be used in combination.

<<Ester-based plasticizing agent>>

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agent may be used alone, or two or more thereof may be used in combination.

<<Content of plasticizing agent>>

A content of a plasticizing agent when compounded based on 100 parts by mass of the rubber component is preferably less than 30 parts by mass, more preferably less than 20 parts by mass, further preferably 15 parts by mass or less, further preferably 13 parts by mass or less. The content is preferably greater than 5 parts by mass, more preferably greater than 7 parts by mass, further preferably 10 parts by mass or more.

<<Compatibilizer>>

A compatibilizer is used for the purpose of reducing a separation energy at an interface between a polymer and a filler or between different polymers and aiding in intermixing of polymers with each other. The compatibilizer is not particularly limited, and any of those conventionally used in the tire industry can be used. Specific examples of the compatibilizer include, for example: non-reactive compatibilizers such as an ethylene-propylene-styrene copolymer, a styrene-ethylene-butadiene block copolymer, a styrene-methyl methacrylate block copolymer, an ethylene-styrene graft copolymer, chlorinated polyethylene, a mixture of an aromatic hydrocarbon-based resin and an aliphatic hydrocarbon-based resin, a metal soap of an unsaturated fatty acid, and the like; and reactive compatibilizers such as a maleic anhydride graft polypropylene, a styrene-maleic anhydride copolymer, an ethylene-glycidyl methacrylate copolymer, a styrene graft copolymer onto an ethylene-glycidyl methacrylate copolymer, and the like. Among them, an ethylene-propylene-styrene copolymer is preferable. The compatibilizer may be used alone, or two or more thereof may be used in combination.

A content of a compatibilizer is not particularly limited, but in consideration of air barrier property, it is, for example, preferably greater than 3 parts by mass, more preferably greater than 4 parts by mass, further preferably 5 parts by mass or more, based on 100 parts by mass of the rubber component. On the other hand, the content is preferably less than 15 parts by mass, more preferably less than 12 parts by mass, further preferably less than 10 parts by mass.

(Processing aid)

Examples of processing aid include, for example, a fatty acid metal salt, a fatty acid amide, an amide ester, a silica surface active agent, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. Processing aid may be used alone, or two or more thereof may be used in combination.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Vulcanized rubber particle)

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle is not particularly limited and may be a non-modified vulcanized rubber particle or a modified vulcanized rubber particle. As commercially available products of vulcanized rubbers, for example, products from Lehigh Technologies, Muraoka Rubber Reclaiming Co., Ltd., etc. can be used. The vulcanized rubber particle may be used alone, or two or more thereof may be used in combination.

(Wax)

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. Wax may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

(Stearic acid)

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 5 parts by mass, further preferably less than 3 parts by mass, from the viewpoint of vulcanization rate.

(Zinc oxide)

A content of zinc oxide when compounded based on 100 parts by mass of the rubber component is preferably greater than 0.5 parts by mass, more preferably greater than 0.7 parts by mass, further preferably 1 part by mass or more, from the viewpoint of processability. On the other hand, the content is preferably less than 10 parts by mass, more preferably less than 5 parts by mass, further preferably less than 3 parts by mass, from the viewpoint of abrasion resistance.

(Antioxidant)

Examples of the antioxidant include, but not particularly limited to, a naphthylamine-based antioxidant such as phenyl-$\alpha$-naphthylamine and the like; a diphenylamine-based antioxidant such as an octylated diphenylamine, 4,4'-

bis($\alpha$,$\alpha$'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 0.8 parts by mass, further preferably greater than 1.0 parts by mass. On the other hand, the content is preferably less than 7.0 parts by mass, more preferably less than 5.0 parts by mass, further preferably 3.0 parts by mass or less.

(Cross-linking agent)

Cross-linking between polymers in the cross-linked rubber is not limited to cross-linking involving the boron atom-containing group, and may include another cross-linking such as sulfur cross-linking and the like. In this case, desired cross-linking agent and vulcanization accelerator can be appropriately compounded. The cross-linking agent is not particularly limited, and any known cross-linking agent can be used, examples of which include, for example, an organic peroxide, a sulfur-based vulcanizing agent, a resin vulcanizing agent, metal oxide such as magnesium oxide and the like, etc. Among them, a sulfur-based vulcanizing agent is preferable. As the sulfur-based vulcanizing agent, for example, sulfur, a sulfur donor such as morpholine disulfide and the like, etc. can be used. Among them, it is preferable to use sulfur. The cross-linking agent can be used alone, or two or more thereof can be used in combination.

Examples of sulfur include a powdered sulfur, a precipitated sulfur, a colloidal sulfur, a surface processing sulfur (an oil processing sulfur, a special sulfur processed with a dispersant, a masterbatch type sulfur, etc.), an insoluble sulfur (oil processing insoluble sulfur, etc.), and the like, any of which are appropriately used. Among them, a powdered sulfur is preferable. As sulfur, for example, those manufactured and sold by Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc., and the like can be used.

As a cross-linking agent, a known organic cross-linking agent can also be used. The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like. Among them, 1,6-bis(N,N'-dibenzylthiocarbamoyldithio)hexane is preferable. As these organic cross-linking agents, those commercially available from Taoka Chemical Co., Ltd., LANXESS, Flexsys, etc. can be used.

A content of a cross-linking agent when compounded based on 100 parts by mass of the rubber component is preferably greater than 0.4 parts by mass, more preferably 0.5 parts by mass or more, further preferably 1.0 parts by mass or more. On the other hand, the content is preferably less than 6.0 parts by mass, more preferably less than 4.0 parts by mass, further preferably less than 2.0 parts by mass. When the content of the cross-linking agent is within the above-described ranges, an appropriate reinforcing effect tends to be obtained. Besides, when the cross-linking agent is a vulcanizing agent, which comprises a component other than sulfur, such as oil processing sulfur and the like, a content of the cross-linking agent means a content of the sulfur component itself.

(Vulcanization accelerator)

The vulcanization accelerator is not particularly limited, and any known vulcanization accelerator can be used, examples of which include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. Among them, thiazole-based, sulfenamide-based, thiuram-based, and guanidine-based vulcanization accelerators are preferable, and thiazole-based and sulfenamide-based vulcanization accelerators are more preferable. As the vulcanization accelerator, for example, those manufactured and sold by Ouchi Shinko Chemical Industry Co., Ltd., Sanshin Chemical Industry Co., Ltd., etc. can be used. The vulcanization accelerator may be used alone, or two or more thereof may be used in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DZ), and the like. Examples of the thiazole-based vulcanization accelerator include di-2-dibenzothiazolyl disulfide and the like. Examples of the thiuram-based vulcanization accelerator include, for example, tetramethylthiuram monosulfide, tetramethylthiuram disulfide, tetrabenzylthiuram disulfide (TBzTD), and the like. Examples of the guanidine-based vulcanization accelerator include, for example, 1,3-diphenylguanidine (DPG), diorthotrilguanidine, orthotrilbiguanidine, and the like. Among them, a combination of a sulfenamide-based vulcanization accelerator and a guanidine-based vulcanization accelerator is preferable, or a combination of these two types of vulcanization accelerators further with a thiazole-based vulcanization accelerator is also preferable.

A content of a vulcanization accelerator based on 100 parts by mass of the rubber component is preferably greater than 0.5 parts by mass, more preferably greater than 1.0 parts by mass, further preferably 1.8 parts by mass or more. On the other hand, the content is preferably less than 6.0 parts by mass, more preferably less than 5.0 parts by mass, further preferably 4.0 parts by mass or less. When the content of the vulcanization accelerator is within the above-described ranges, breaking strength and elongation tend to be secured.

<Various materials comprising carbon atoms>

In the present specification, various materials comprising carbon atoms (for example, a rubber, oil, resin, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

<Application of cross-linked rubber>

The cross-linked rubber can be used as a cross-linked rubber constituting a variety of tire members such as a cap tread, a base tread, a sidewall, a clinch apex, a wing, an inner liner, and the like.

<In a case where the cross-linked rubber constitutes an inner liner>

When the cross-linked rubber constitutes an inner liner, the rubber component preferably comprises a butyl-based rubber. The above-described explanation can be applied to components other than the rubber component.

In this case, the rubber component may comprise rubber components other than the butyl-based rubber. Examples of rubber components other than the butyl-based rubber include, for example, diene-based rubbers such as an isoprene-based rubber (IR-based rubber), a styrene-butadiene rubber (SBR), a butadiene rubber (BR), and the like. These diene-based rubbers may be specifically modified diene-based rubbers. Moreover, non-diene-based rubbers and rubber components synthesized from the above-described recycled-derived and biomass-derived raw materials can also be used in the same manner. The butyl-based rubber, the rubber components other than the butyl-based rubber, the diene-based rubbers, the non-diene-based rubbers, and the like may be used alone, or two or more thereof may be used in combination, respectively.

Examples of the butyl-based rubber include a butyl rubber (IIR), a halogenated butyl rubber (X-IIR) such as a brominated butyl rubber (Br-IIR), a chlorinated butyl rubber (Cl-IIR) and the like, etc. Among them, a halogenated butyl rubber is preferable, and a brominated butyl rubber and a chlorinated butyl rubber are more preferable, from the viewpoint that sheet processability and air barrier property can be improved with a good balance. The butyl-based rubber can be used alone, or two or more thereof can be used in combination.

As the butyl-based rubber, for example, products from Exxon Mobil Corporation, ENEOS Materials Corporation, ARLANXEO, JSR Corporation, Japan Butyl Co., Ltd., etc. can be used.

A content of a butyl-based rubber in the rubber component is preferably greater than 70% by mass, more preferably greater than 80% by mass, further preferably greater than 90% by mass, and may be 100% by mass, from the viewpoints of air permeation resistance and heat resistance.

[Producing method]

The tire relating to the present embodiment can be produced by a known method.

<Production of rubber composition>

A rubber composition before cross-linking, comprising a rubber component and a cross-linking agent can be produced by a known method. For example, it can be produced by kneading each of the above-described components using a rubber kneading apparatus such as an open roll, a closed type kneader (Bunbury mixer, kneader, etc.), and the like. The kneading step includes, for example, a base kneading step of kneading compounding agents and additives other than vulcanizing agents and vulcanization accelerators and a final kneading (F kneading) step of adding vulcanizing agents and

vulcanization accelerators to the kneaded product obtained by the base kneading step and kneading them. Furthermore, the base kneading step can be divided into a plurality of steps, if desired. Examples of a kneading condition include, but not particularly limited to, for example, in the base kneading step, a method of kneading at a discharge temperature from 130 to 170°C for 3 to 10 minutes, and in the final kneading step, a method of kneading at 50 to 110°C for 1 to 5 minutes.

<Production of tire>

Each of the rubber compositions obtained above is extruded into a desired shape of a rubber member at an uncrosslinked stage. The rubber member is, for example, at least one selected from the group consisting of a cap tread, an inner liner, a sidewall, a clinch apex, a wing, and the like. The rubber member thus obtained can be molded together with other tire members on a tire molding machine by a usual method, thereby allowing for production of an uncrosslinked tire. The tire of the present embodiment can be produced by heating and pressurizing this uncrosslinked tire in a vulcanizer. Examples of a cross-linking condition include, but not particularly limited to, for example, a method of cross-linking at 150 to 200°C for 5 to 30 minutes.

[Applications]

In the present specification, the tire can be used for any applications, regardless of whether it is a pneumatic tire or a non-pneumatic tire, and can be used as a tire for a passenger car, a tire for a large passenger car, a tire for a large SUV, a racing tire, a motorcycle tire, a heavy-duty tire, or a run flat tire. Besides, the tire for a passenger car is a tire on the premise that it is mounted on a car running on four wheels and refers to one having a maximum load capacity of less than 1400 kg. Moreover, the heavy-duty tire refers to a tire with a maximum load capacity of 1400 kg or more. Moreover, in the present specification, the tire can be used as an all-season tire, a summer tire, or a winter tire such as a studless tire and the like.

EXAMPLES

Examples considered to be preferable in implementation (Examples) are shown below, though the scope of the present invention is not limited to Examples. Results calculated based on the following evaluation methods considering a tire having a cross-linked rubber constituting a cap tread obtained using various chemicals shown below and a tire structure, according to each table, are shown in the lower part of each Table.

[Various chemicals]

Various chemicals used in Examples and Comparative examples are collectively shown below.

IR-based rubber: NR (TSR20)
SBR: SBR produced according to Production example 1 below (styrene content: 25% by mass, vinyl content: 59 mol%, Tg: -22°C, Mw: 350,000, non-oil extended)
BR: ASAPRENE N103 (cis content: 38 mol%, Mw: 550,000, available from Asahi Kasei Corporation)
Specifically modified diene-based rubber 1: Specifically modified NR produced according to Production example 2 below
Specifically modified diene-based rubber 2: Specifically modified SBR produced according to Production example 3 below
Specifically modified diene-based rubber 3: Specifically modified BR produced according to Production example 4 below
BDB: Benzene-1,4-diboronic acid diester compound represented by the following chemical formula (molecular weight: 310.01, of which a total boron atom weight: 21.62)

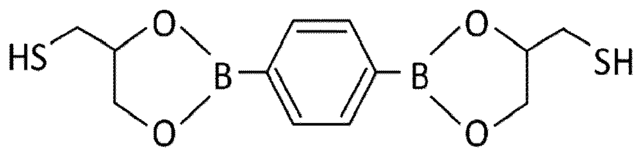

CB (Carbon black): DIABLACK I manufactured by Mitsubishi Chemical Corporation (N220, $N_2SA$: 114 $m^2/g$, average primary particle size: 22 nm)
Silica: Ultrasil VN3 manufactured by Evonik Industries AG ($N_2SA$: 175 $m^2/g$, average primary particle size: 18 nm)
Coupling agent (Silane coupling agent): Si266 manufactured by Evonik Industries AG (bis(3-triethoxysilylpropyl)disulfide)
Resin: Petrotack 90 manufactured by Tosoh Corporation (C5/C9-based resin, softening point: 95°C)
Oil: Diana Process NH-70S manufactured by Idemitsu Kosan Co., Ltd.
Zinc oxide: Zinc oxide No. 1 manufactured by Mitsui Mining & Smelting Co., Ltd.
Antioxidant: Nocrac 6C manufactured by Ouchi Shinko Chemical Industry Co., Ltd. (N-(1,3-dimethylbutyl)-N'-phenyl-p-phenylenediamine)
Stearic acid: Bead stearic acid "CAMELLIA" manufactured by NOF CORPORATION
Wax: OZOACE 0355 manufactured by Nippon Seiro Co., Ltd (paraffin wax)
Radical initiator: 2,2'-azobis (isobutyronitrile)
Sulfur: 5% oil processing powdered sulfur manufactured by Tsurumi Chemical Industry Co., Ltd.
Vulcanization accelerator 1: Nocceler D manufactured by Ouchi Shinko Chemical Industry Co., Ltd. (1,3-diphenylguanidine (DPG))
Vulcanization accelerator 2: Nocceler CZ manufactured by Ouchi Shinko Chemical Industry Co., Ltd. (N-cyclohexyl-2-benzothiazolylsulfenamide (CBS))
Vulcanization accelerator 3: Nocceler DM-P (DM) manufactured by Ouchi Shinko Chemical Industry Co., Ltd. (di-2-benzothiazolyl disulfide (MBTS))
Vulcanization accelerator 4: Sanceler NS-G manufactured by Sanshin Chemical Industry Co., Ltd. (N-(tert-butyl)-2-benzothiazolelsulfenamide (TBBS))

Production example 1: Production of SBR

Cyclohexane, tetrahydrofuran, styrene, and 1,3-butadiene are charged into an autoclave reactor subjected to nitrogen purge. A ratio of styrene and 1,3-butadiene is adjusted so that a styrene content becomes 25% by mass. After adjusting the temperature of the contents in the reactor to 20°C, n-butyllithium is added to initiate polymerization. The polymerization is performed under an adiabatic condition, and the temperature reaches 80°C of the maximum temperature. After confirming production of a polymer having a Mw of 350,000 by GPC, a polymerization solution is poured into 4 L of ethanol to collect a precipitate. After blow-drying the obtained precipitate, it is dried under reduced pressure at 80°C/10 Pa or lower until a drying loss becomes 0.1% to obtain an SBR.

Production example 2: Production of specifically modified diene-based rubber 1

100 parts by mass of the above-described NR (TSR20) and a borane-pyridine complex are mixed for 5 minutes in a mixer set at 90°C to synthesize an isoprene rubber modified with the borane-pyridine complex, i.e., a specifically modified NR. A boron content of the specially modified NR is 0.1 parts by mass.

Production example 3: Production of specifically modified diene-based rubber 2

100 parts by mass of the SBR obtained in Production example 1 above and a borane-pyridine complex are mixed for 5 minutes in a mixer set at 90°C to synthesize a styrene-butadiene rubber modified with the borane-pyridine complex, i.e., a specifically modified SBR. A boron content of the specially modified SBR is 0.1 parts by mass.

Production example 4: Production of specifically modified diene-based rubber 3

100 parts by mass of the above-described BR (ASAPRENE N103) and a borane-pyridine complex are mixed for 5 minutes in a mixer set at 90°C to synthesize a butadiene rubber modified with the borane-pyridine complex, i.e., a specifically modified BR. A boron content of the specially modified BR is 0.1 part by mass.

[Examples and Comparative examples]

A tire is produced according to a tire structure and compounding formulations shown in each table. First, using a 1.7 L closed Banbury mixer, all chemicals other than sulfur and vulcanization accelerators are kneaded until a temperature reaches a discharge temperature at 150°C to 160°C for 1 to 10 minutes to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The obtained unvulcanized rubber composition is used to be extruded into a shape of a cap tread with an extruder equipped with a mouthpiece having a predetermined shape, which is then attached together with other tire members to produce an unvulcanized tire. The obtained unvulcanized tire is press-vulcanized at 170°C for 12 minutes to produce each test tire (tire size: 195/65R15). Besides, regardless of a thickness of the cap tread, thicknesses of base treads shall be constant.

[Evaluation]

For each test tire, results measured by the following methods are described in the corresponding columns of Tables below. Each test tire is used after made into a standardized state, unless otherwise specified.

<Fuel efficiency>

For each test tire, a rolling resistance coefficient (RRC) is measured using a rolling resistance tester when the tire runs on a drum at a speed of 80 km/h under the following conditions. The results are indicated as indexes with the reference Comparative example being as 100. The larger the index is, the lower the rolling resistance of the tire is.

Rim size: 15×6.5J
Internal pressure: 210 kPa
Load: 4.82 kN

Table 1

| | Example | | | | | | | |
|---|---|---|---|---|---|---|---|---|
| | 1-1 | 1-2 | 1-3 | 1-4 | 1-5 | 1-6 | 1-7 | 1-8 |
| Compounding (parts by mass) | | | | | | | | |
| IR-based rubber | - | 20 | 20 | - | - | 20 | 20 | - |
| SBR | 60 | 30 | - | - | - | - | - | 20 |
| BR | 20 | 20 | 20 | 20 | 10 | - | - | - |
| Specifically modified diene-based rubber 1 (modified NR) | 20 | - | - | 20 | 20 | - | - | 80 |
| Specifically modified diene-based rubber 2 (modified SBR) | - | 30 | 60 | 60 | 60 | 80 | 80 | - |
| Specifically modified diene-based rubber 3 (modified BR) | - | - | - | - | 10 | - | - | - |
| CB | 5 | 5 | 5 | 5 | 5 | 5 | 5 | 5 |
| Silica | 65 | 65 | 65 | 65 | 85 | 85 | 85 | 65 |
| Coupling agent | 4.5 | 4.5 | 4.5 | 4.5 | 6.5 | 6.5 | 6.5 | 4.5 |
| Resin | - | - | - | - | - | - | 3 | - |
| Oil | 10 | 10 | 10 | 10 | 10 | 10 | 10 | 10 |
| Zinc oxide | 3 | 3 | 3 | 3 | 3 | 3 | 3 | 3 |
| Antioxidant | 2 | 2 | 2 | 2 | 2 | 2 | 2 | 2 |
| Stearic acid | 2 | 2 | 2 | 2 | 2 | 2 | 2 | 2 |
| Wax | 2 | 2 | 2 | 2 | 2 | 2 | 2 | 2 |
| Sulfur | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 |
| Vulcanization accelerator 2 | 2 | 2 | 2 | 2 | 2 | 2 | 2 | 2 |
| Content of IR-based rubber (% by mass) [$A_{IR}$] | 20 | 20 | 20 | 20 | 20 | 20 | 20 | 80 |
| Content of BD unit-containing rubber (% by mass) [$A_{BD}$] | 80 | 80 | 80 | 80 | 80 | 80 | 80 | 20 |
| $A_{IR}$+$A_{BD}$ [Inequality (1)] | 100 | 100 | 100 | 100 | 100 | 100 | 100 | 100 |
| Thickness of member (mm) [T] | 7.0 | 7.0 | 7.0 | 7.0 | 7.0 | 7.0 | 7.0 | 7.0 |
| ($A_{IR}$+$A_{BD}$)/T [Inequality (2)] | 14.3 | 14.3 | 14.3 | 14.3 | 14.3 | 14.3 | 14.3 | 14.3 |
| Content of boron (parts by mass) | 0.02 | 0.03 | 0.06 | 0.06 | 0.09 | 0.08 | 0.08 | 0.08 |
| Fuel efficiency index | 130 | 135 | 140 | 145 | 150 | 155 | 155 | 140 |

| | Comparative example | | | | | |
|---|---|---|---|---|---|---|
| | 1-1 | 1-2 | 1-3 | 1-4 | 1-5 | 1-6 |
| Compounding (parts by mass) | | | | | | |
| IR-based rubber | 20 | - | 100 | 10 | 30 | 20 |
| SBR | 60 | 100 | - | - | - | 30 |

(continued)

| | Comparative example | | | | | |
|---|---|---|---|---|---|---|
| | 1-1 | 1-2 | 1-3 | 1-4 | 1-5 | 1-6 |
| Compounding (parts by mass) | | | | | | |
| BR | 20 | - | - | 30 | 10 | 20 |
| Specifically modified diene-based rubber 1 (modified NR) | - | - | - | - | 60 | - |
| Specifically modified diene-based rubber 2 (modified SBR) | - | - | - | 60 | - | 30 |
| Specifically modified diene-based rubber 3 (modified BR) | - | - | - | - | - | - |
| CB | 5 | 5 | 5 | 5 | 5 | 5 |
| Silica | 65 | 65 | 65 | 65 | 65 | 65 |
| Coupling agent | 4.5 | 4.5 | 4.5 | 4.5 | 4.5 | 4.5 |
| Resin | - | - | - | - | - | - |
| Oil | 10 | 10 | 10 | 10 | 10 | 10 |
| Zinc oxide | 3 | 3 | 3 | 3 | 3 | 3 |
| Antioxidant | 2 | 2 | 2 | 2 | 2 | 2 |
| Stearic acid | 2 | 2 | 2 | 2 | 2 | 2 |
| Wax | 2 | 2 | 2 | 2 | 2 | 2 |
| Sulfur | 1.5 | 1.5 | 1.5 | 1.5 | 1.5 | 1.5 |
| Vulcanization accelerator 1 | 2 | 2 | 2 | 2 | 2 | 2 |
| Vulcanization accelerator 2 | 2 | 2 | 2 | 2 | 2 | 2 |
| Content of IR-based rubber (% by mass) [$A_{IR}$] | 20 | 0 | 100 | 10 | 90 | 20 |
| Content of BD unit-containing rubber (% by mass) [$A_{BD}$] | 80 | 100 | 0 | 90 | 10 | 80 |
| $A_{IR}+A_{BD}$ [Inequality (1)] | 100 | 100 | 100 | 100 | 100 | 100 |
| Thickness of member (mm) [T] | 7.0 | 15.0 | 15.0 | 15.0 | 15.0 | 15.0 |
| $(A_{IR}+A_{BD})/T$ [Inequality (2)] | 14.3 | 6.7 | 6.7 | 6.7 | 6.7 | 6.7 |
| Content of boron (parts by mass) | 0.00 | 0.00 | 0.00 | 0.04 | 0.04 | 0.03 |
| Fuel efficiency index | 100 | 80 | 90 | 90 | 80 | 90 |

Table 2

| | Example | | | | | | Comparative example |
|---|---|---|---|---|---|---|---|
| | 2-1 | 2-2 | 2-3 | 2-4 | 2-5 | 2-6 | 2-1 |
| Compounding (parts by mass) | | | | | | | |
| IR-based rubber | 20 | 20 | 20 | 20 | 20 | 80 | 20 |
| SBR | 60 | 60 | 60 | 80 | 80 | 10 | 60 |
| BR | 20 | 20 | 20 | - | - | 10 | 20 |
| BDB | 25 | 5 | 25 | 25 | 25 | 25 | - |
| Radical initiator | 0.1 | 0.1 | 0.1 | 0.1 | 0.1 | 0.1 | 0.1 |
| CB | 5 | 5 | 5 | 5 | 5 | 5 | 5 |
| Silica | 65 | 65 | 85 | 65 | 65 | 65 | 65 |
| Coupling agent | 4.5 | 4.5 | 4.5 | 4.5 | 4.5 | 4.5 | 4.5 |
| Resin | - | - | - | - | 3 | - | - |
| Oil | 10 | 10 | 10 | 10 | 10 | 10 | 10 |
| Zinc oxide | 3 | 3 | 3 | 3 | 3 | 3 | 3 |
| Antioxidant | 2 | 2 | 2 | 2 | 2 | 2 | 2 |
| Stearic acid | 2 | 2 | 2 | 2 | 2 | 2 | 2 |
| Wax | 2 | 2 | 2 | 2 | 2 | 2 | 2 |
| Sulfur | 1 | 1 | 1 | 1 | 1 | 1 | 1 |

(continued)

| | Example | | | | | | Comparative example |
|---|---|---|---|---|---|---|---|
| | 2-1 | 2-2 | 2-3 | 2-4 | 2-5 | 2-6 | 2-1 |
| Compounding (parts by mass) | | | | | | | |
| Vulcanization accelerator 1 | 0.6 | 0.6 | 0.6 | 0.6 | 0.6 | 0.6 | 0.6 |
| Vulcanization accelerator 3 | 0.6 | 0.6 | 0.6 | 0.6 | 0.6 | 0.6 | 0.6 |
| Vulcanization accelerator 4 | 0.6 | 0.6 | 0.6 | 0.6 | 0.6 | 0.6 | 0.6 |
| Content of IR-based rubber (% by mass) [$A_{IR}$] | 20 | 20 | 20 | 20 | 20 | 80 | 20 |
| Content of BD unit-containing rubber (% by mass) [$A_{BD}$] | 80 | 80 | 80 | 80 | 80 | 20 | 80 |
| $A_{IR}$+$A_{BD}$ [Inequality (1)] | 100 | 100 | 100 | 100 | 100 | 100 | 100 |
| Thickness of member (mm) [T] | 7.0 | 7.0 | 7.0 | 7.0 | 7.0 | 7.0 | 7.0 |
| ($A_{IR}$+$A_{BD}$)/T [Inequality (2)] | 14.3 | 14.3 | 14.3 | 14.3 | 14.3 | 14.3 | 14.3 |
| Content of boron (parts by mass) | 1.74 | 0.35 | 1.74 | 1.74 | 1.74 | 1.74 | 0.00 |
| Fuel efficiency index | 130 | 110 | 155 | 145 | 145 | 120 | 100 |

REFERENCE SIGNS LIST

1. Cap tread
3. Inner liner rubber
4. Sidewall
5. Clinch apex
6. Wing

T1. Thickness of cap tread
T3. Thickness of inner liner
T4. Thickness of sidewall
T5. Thickness of clinch apex
T6. Thickness of wing
P1. Point where sidewall and clinch apex come into contact with each other on outer surface of tire
L1. Normal line of main body of carcass
P2. Point where contour line of tread on outer side in tire width direction intersects with contour line of sidewall on outer side in tire radial direction
L2. Normal line of outer surface of tire
CL. Tire center line
R. Rim

## Claims

**1.** A tire comprising at least one rubber member composed of a cross-linked rubber comprising:

a rubber component comprising an isoprene-based rubber and a butadiene unit-containing rubber,
silica, and
a cross-linking agent,
wherein the cross-linked rubber has a boron atom-containing group, and
wherein the tire satisfies the following inequalities, preferably a value on the right side in the inequality (1) being 75, more preferably 80, further preferably 85, further preferably 90, further preferably 95, and preferably a value on the right side in the inequality (2) being 11.0, where $A_{IR}$ represents a content, in % by mass, of the isoprene-based rubber in the rubber component, $A_{BD}$ represents a content, in % by mass, of the butadiene unit-containing rubber in the rubber component, and T represents a thickness, in mm, of the rubber member:

(1)

$$A_{IR}+A_{BD}>70,$$

(2)

$$(A_{IR}+A_{BD})/T>10.0,$$

(provided that $A_{IR}>10$, $A_{BD}>10$).

2. The tire of claim 1, wherein a value on the right side in the inequality (2) is 12.0, preferably 13.0.

3. The tire of claim 1, wherein a value on the right side in the inequality (2) is 14.0.

4. The tire of any one of claims 1 to 3, wherein a boron content based on 100 parts by mass of the rubber component is 0.05 parts by mass or more, preferably 0.07 parts by mass or more, more preferably 0.09 parts by mass or more, further preferably 0.3 parts by mass or more, further preferably 0.5 parts by mass or more, further preferably 1.0 parts by mass or more, further preferably 1.5 parts by mass or more.

5. The tire of any one of claims 1 to 4, wherein the butadiene unit-containing rubber comprises a styrene-butadiene rubber.

6. The tire of any one of claims 1 to 4, wherein the butadiene unit-containing rubber comprises a styrene-butadiene rubber and a butadiene rubber.

7. The tire of claim 5 or 6, wherein a content of the styrene-butadiene rubber in the rubber component is 80% by mass or more, preferably 85% by mass or more.

8. The tire of any one of claims 1 to 7,

wherein the cross-linked rubber comprises a plasticizing agent, and
wherein a content of the plasticizing agent is 15 parts by mass or less, preferably 13 parts by mass or less, based on 100 parts by mass of the rubber component.

9. The tire of any one of claims 1 to 8,

wherein the cross-linked rubber comprises a plasticizing agent, and
wherein the plasticizing agent comprises resin.

10. The tire of any one of claims 1 to 9, wherein at least one rubber selected from the group consisting of the isoprene-based rubber and the butadiene unit-containing rubber is a modified rubber modified with a complex of a nitrogen-containing aromatic compound and a boron compound having a B-H bond.

11. The tire of claim 10, wherein the nitrogen-containing aromatic compound is at least one selected from the group consisting of pyridine, quinoxaline, pyrrole, pyrazine, pyrimidine, pyridazine, thiazole, oxazole, imidazole, pyrazole, isoxazole, isothiazole, triazole, furazan, oxadithiazole, thiadiazole, dioxazole, and dithiazole.

12. The tire of any one of claims 1 to 11, wherein the cross-linked rubber has a cross-linking site bonded via boron-oxygen bond.

13. The tire of claim 12, wherein the cross-linking site comprises a group having a diboronic acid ester skeleton unit.

14. The tire of any one of claims 1 to 13, wherein the rubber member is one selected from a cap tread, a base tread, a sidewall, a clinch apex, a wing, and an inner liner.

15. The tire of claim 14, wherein the rubber member is a cap tread.

FIG. 1

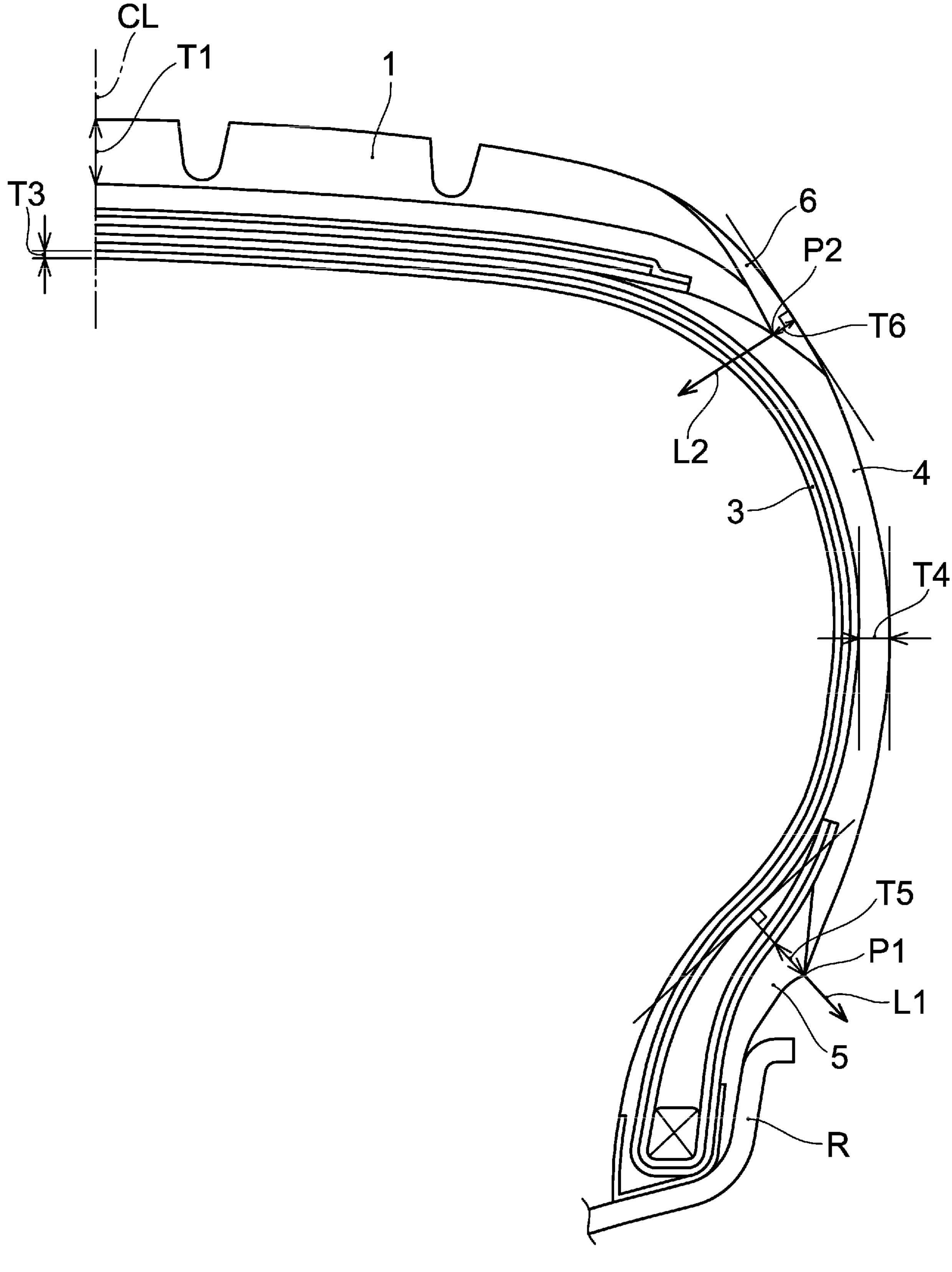

Europäisches Patentamt
European Patent Office
Office européen des brevets

# EUROPEAN SEARCH REPORT

Application Number
EP 25 18 2044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 382 556 A1 (BRIDGESTONE CORP [JP]) 12 June 2024 (2024-06-12) * claims; examples * * paragraphs [0018] - [0019] * ----- | 1-15 | INV. C08C19/00 C08C19/22 B60C1/00 C08K5/55 C08L7/00 C08K3/36 C08L9/06 |
| A | EP 4 382 553 A1 (BRIDGESTONE CORP [JP]) 12 June 2024 (2024-06-12) * claims; examples * * paragraphs [0019] - [0020] * ----- | 1-15 | |
| A,D | JP 2024 014499 A (SUMITOMO RUBBER IND) 1 February 2024 (2024-02-01) * claims; examples * * paragraph [0008] * ----- | 1-15 | |
| | | | TECHNICAL FIELDS SEARCHED (IPC) |
| | | | B60C C08L C08K C08C |

The present search report has been drawn up for all claims

1

| Place of search | Date of completion of the search | Examiner |
|---|---|---|
| Munich | 22 October 2025 | Baekelmans, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 18 2044

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2025

| Patent document cited in search report | Publication date | Patent family member(s) | Publication date |
| --- | --- | --- | --- |
| EP 4382556 A1 | 12-06-2024 | CN 117715958 A | 15-03-2024 |
| | | EP 4382556 A1 | 12-06-2024 |
| | | JP 2023023662 A | 16-02-2023 |
| | | US 2024327548 A1 | 03-10-2024 |
| | | WO 2023013335 A1 | 09-02-2023 |
| EP 4382553 A1 | 12-06-2024 | CN 117651731 A | 05-03-2024 |
| | | EP 4382553 A1 | 12-06-2024 |
| | | JP 2023023661 A | 16-02-2023 |
| | | US 2024301096 A1 | 12-09-2024 |
| | | WO 2023013334 A1 | 09-02-2023 |
| JP 2024014499 A | 01-02-2024 | EP 4309917 A1 | 24-01-2024 |
| | | JP 2024014499 A | 01-02-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024014499 A
- JP 2009002594 A
- EP 3427975 A
- JP 6856781 B
- EP 3173251 A


### Non-patent literature cited in the description


- *Akita Prefectural University Web Journal B*, 2019, vol. 6, 216-222
- *Rubber Chemistry and Technology*, 2012, vol. 85 (3), 408-449
- A comparison of surface morphology and chemistry of pyrolytic carbon blacks with commercial carbon blacks. *Powder Technology*, 2005, vol. 160, 190-193